Europäisches Patentamt

European Patent Office

Office européen des brevets

(11) Numéro de publication: **0 396 842**
**A1**

## (12) DEMANDE DE BREVET EUROPEEN

(21) Numéro de dépôt: 89401323.4

(22) Date de dépôt: **11.05.89**

(51) Int. Cl.5: **F24F 3/16**

(43) Date de publication de la demande:
**14.11.90 Bulletin 90/46**

(84) Etats contractants désignés:
**AT BE CH DE ES FR GB GR IT LI LU NL SE**

(71) Demandeur: **Bardet, Guy**
**10 rue du Clos Portereau**
**F-44120 Vertou(FR)**

(72) Inventeur: **Bardet, Guy**
**10 rue du Clos Portereau**
**F-44120 Vertou(FR)**

(74) Mandataire: **Phélip, Bruno et al**
**c/o Cabinet Harlé & Phélip 21, rue de La**
**Rochefoucauld**
**F-75009 Paris(FR)**

(54) **Unité de production de flux laminaire stérile à circulation verticale.**

(57) L'unité comporte un caisson mobile (2) comprenant les moyens de production et de propulsion (21) du flux d'air, associés à un préfiltre (27).

Une colonne porteuse (3) s'étend vers le haut à partir du caisson (2) et une hotte (4) part de la partie supérieure (31) de cette colonne (3) pour venir se positionner au-dessus du caisson (2). La hotte (4) est munie d'un filtre (42) et d'une grille de distribution (45).

L'invention est particulièrement destinée à être utilisée dans les cabinets vétérinaires, services de pédiatrie ou unités de fabrication de micro-électronique.

_fig. 2_

EP 0 396 842 A1

## UNITE DE PRODUCTION DE FLUX LAMINAIRE STERILE A CIRCULATION VERTICALE

L'invention concerne le domaine de la production de flux laminaire stérile et plus particulièrement les unités de production de flux laminaire stérile, à circulation verticale, utilisées pour limiter les problèmes d'aérobiocontamination, dans les activités médico-chirurgicales, les industries vétérinaires, pharmaceutiques et agro-alimentaires ou encore les industries propres comme l'électronique, la micro-électronique, micro-mécanique ou aéro-spatiale.

Que ce soit dans le domaine médical ou électronique et mécanique de précision, la présence de corps étrangers et particulièrement de bactéries ou particules inertes, est tout à fait préjudiciable.

Dans le domaine médical, les bactéries, transportées par les surfaces cutanées, les vêtements, les micro-particules liées aux postillons, à la toux ou éternuements, sont la cause d'infections pouvant parfois être très graves, notamment lors des ouvertures opératoires, au niveau desquelles l'individu ne dispose d'aucune défense.

Dans le domaine des industries propres (micro-électroniques, micro-mécaniques ...) les bactéries jouent un rôle néfaste, non pas par leur pouvoir pathogène, mais par leur nature particulaire, au même titre que les poussières ou nombreuses particules liées à la desquamation, dans la mesure où elles peuvent jouer le rôle d'interférences ou provoquer de mauvais contacts entre les différents éléments.

La difficulté d'élimination de ces différentes particules ou bactéries est liée, d'une part à leur taille, de l'ordre du micron ou de quelques dizaines de microns, et d'autre part à leur quantité et à leur nature ubiquitaire.

Afin de remédier à ce problème, les salles d'opération, les unités de fabrication et de conditionnement de produits stériles, ainsi que les ateliers de fabrication de certains matériels comportant de la micro-électronique par exemple, sont équipés de systèmes d'aération par air stérile et à flux laminaire.

De tels appareils sont décrits par exemple dans les documents EP-A-0 062 719 et WO-8 504 240.

Le flux laminaire est le flux d'air par lequel la totalité de l'air à l'intérieur d'une enceinte ou d'une zone, se déplace à une vitesse uniforme, le long de lignes parallèles, avec un minimum de turbulences.

L'écoulement laminaire de l'air est obtenu grâce à la structure des filtres absolus, qui peuvent être à "petits plis" ou à "plis profonds", ces derniers procurant, à degré de filtration égal, un meilleur écoulement.

L'obtention d'un flux d'air laminaire, ne comportant ni tourbillon, ni perturbation assure une bonne conservation de l'aseptie du volume balayé.

Le flux laminaire stérile trouve une application particulièrement intéressante dans le domaine chirurgical, au niveau des salles d'opération.

Le flux laminaire utilisé peut être intégral ou partiel, orienté verticalement ou horizontalement.

Le flux laminaire horizontal évite le dépôt de particules sur l'ouverture opératoire, particulièrement celles émises par le chirurgien au cours de l'intervention. Le volume balayé par le flux est immédiatement lavé, sans que les particules émises aient le temps de parcourir une distance appréciable dans l'axe vertical.

Les appareils d'éclairage du champ opératoire n'ont pas besoin d'être spécialement étudiés sur le plan aéro-dynamique et les bras suspendus de distribution de fluide et autres supports peuvent rester en place.

Par contre, dans ce cas, au moins une des parois de la salle d'opération est totalement envahie par la machinerie de pulsion de l'air.

L'ouverture opératoire peut être contaminée si un membre de l'équipe médicale s'interpose entre le mur soufflant et le patient. Il y a également un risque d'infection, si, par exemple, un abcès s'ouvre. Tout ce qui se trouve en aval sera touché.

Le flux laminaire vertical utilise des techniques identiques à celles employées pour le flux horizontal mais, dans ce cas, le flux est dirigé du haut vers le bas.

Dans le cas d'un flux intégral, l'air est pulsé à partir de la totalité d'une des cloisons de la salle d'opération et repris par la surface entière de la cloison opposée. Le flux se comporte ainsi à la manière d'un piston qui agit sur la totalité du volume du local.

Ce type de construction entraine de nombreux inconvénients, notamment au niveau de la réalisation, car la salle d'opération doit être pratiquement bâtie au centre des locaux contenant la machinerie de soufflage, des gaines de reprise d'air, des emplacements des filtres et pré-filtres logés dans les parois.

Les deux parois utilisées deviennent indisponibles car aucun matériel ne doit les obstruer.

Etant donné la complexité et l'importance de la machinerie mise en oeuvre, le flux laminaire intégral n'est pratiquement pas utilisé.

Si on utilise un flux partiel, l'air pulsé n'est pas repris et la machinerie chargée de la pulsion du flux laminaire peut être intégrée à l'une des parois de la salle ou être indépendante du local. Dans ce cas celui-ci n'a pas à subir de modification de structure.

Le flux partiel est cependant moins efficace que le flux intégral car l'absence de reprise du flux peut provoquer des turbulences néfastes à l'aseptie du volume d'air balayé.

Dans ce domaine hospitalier, lesdifférentes installations connuessont le plus souvent très complexes et très couteuses.

L'appareil décrit dans le document EP-A-0 062 719 comporte des moyens de production et de propulsion d'un flux d'air, associés à une hotte munie d'un filtre pour la distribution du flux dans un espace de travail en milieu hospitalier ou industriel. Le flux est dirigé soit horizontalement soit verticalement et il présente un gradian de vitesse prédéterminé destiné à réaliser une meilleure régulation et un contrôle efficace des particules en suspension.

L'appareil décrit dans le document WO-A-8 504 240 précité est un appareil mobile qui comporte un pied muni de roulettes à partir duquel s'étend, vers le haut, une colonne porteuse munie, à sa partie supérieure, d'une hotte de production du flux d'air. La reprise du flux d'air s'effectue dans la partie basse de la colonne.

La présente invention a pour but de proposer un dispositif permettant de résoudre ces inconvénients.

L'invention a pour objet une unité de production de flux laminaire stérile permettant une utilisation très souple, grâce à des dimensions et à une conception originales.

Ce dispositif est susceptible d'être utilisé dans tous les cas où un volume d'air stérile est requis, et sera tout particulièrement applicable aux cabinets vétérinaires, services de pédiatrie, micro-électronique ou autres, pour lesquels l'encombrement et le coût des installations antérieures étaient prohibitifs.

Selon l'invention, l'unité de production de flux laminaire stérile, à circulation verticale, est constituée d'un caisson mobile comportant les moyens de production et de propulsion du flux d'air, associés à un préfiltre. Il comprend également une colonne porteuse s'étendant vers le haut à partir du caisson, ainsi qu'une hotte partant de la partie supérieure de la colonne, pour venir se positionner au-dessus du caisson. Cette hotte est munie d'un filtre et d'une grille pour la distribution du flux en direction du caisson.

La colonne porteuse assure le transport du flux, du caisson vers la hotte.

Selon une disposition particulièrement intéressante, la partie inférieure du caisson comporte des moyens de reprise du flux d'air, de façon à réaliser un flux intégral entre la hotte et ce caisson.

Ces moyens de reprise du flux d'air comportent un déflecteur disposé sous un orifice prévu dans le fond du caisson, lequel orifice est associé au préfiltre.

Dans un mode de réalisation particulier, la surface supérieure du caisson peut recevoir un plan de travail réglable en hauteur.

Toujours selon l'invention l'encombrement de la hotte est supérieur à celui du plan de travail et elle déborde au-dessus de celui-ci au niveau de sa partie avant et sur ses côtés latéraux.

Toujours selon l'invention, la hotte comprend des moyens de régulation du chauffage du flux d'air ainsi que des moyens permettant une auto-régulation cutanée.

Selon une disposition particulière la hotte est munie d'un plateau de commande comportant l'ensemble des moyens assurant la mise en oeuvre et le contrôle du dispositif.

Selon une autre disposition particulière, la hotte comprend un déflecteur assurant la correction et la répartition du flux sur toute la surface du filtre.

Mais l'invention sera encore illustrée sans être aucunement limitée par la description suivante d'un mode de réalisation particulier donné à titre d'exemple et représenté sur les dessins annexés dans lesquels :

- la figure 1 est une vue en perspective de l'unité de production de flux laminaire selon l'invention,

- la figure 2 est une vue de côté et en coupe de l'unité de production représentée figure 1.

- la figure 3 est une vue en coupe de la hotte de distribution, selon 3-3 de la figure 2,

- la figure 4 représente, en vue agrandie et en coupe, les moyens d'isolation de l'unité de production.

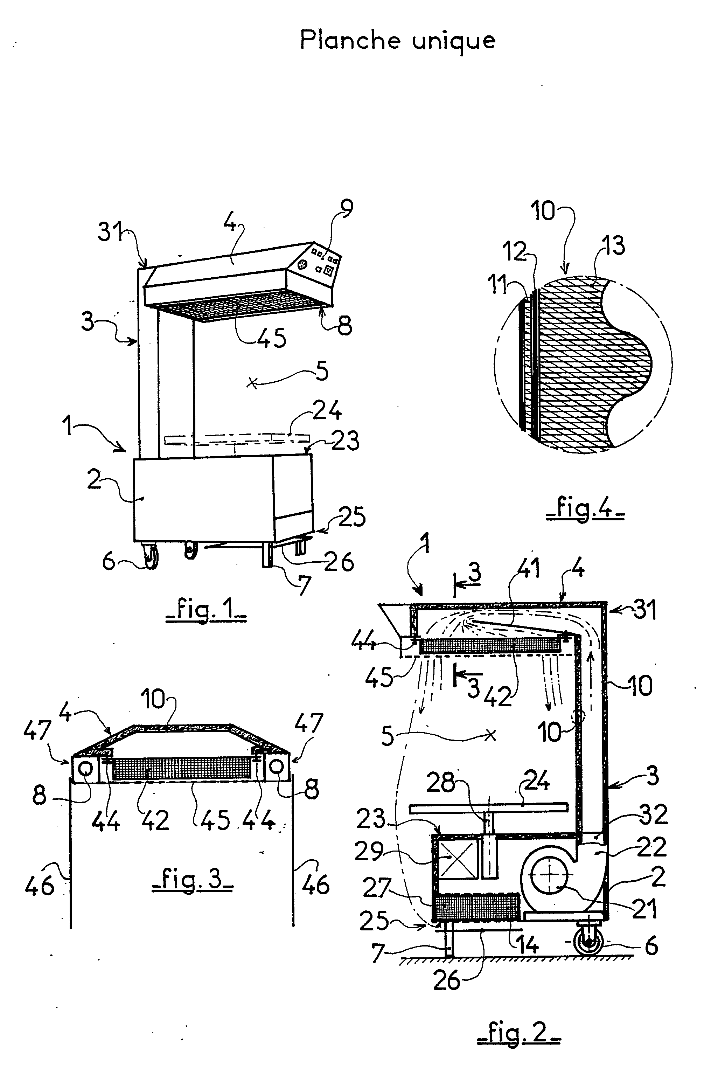

Tel que représenté sur les figures 1 et 2, l'unité de production 1 de flux laminaire est constituée d'un caisson inférieur 2 surmonté, au niveau de sa partie arrière, d'une colonne porteuse 3 qui s'étend vers le haut et qui supporte elle-même une hotte de distribution 4.

La hotte 4 s'étend vers l'avant à partir de la partie supérieure 31 de la colonne porteuse 3 et vient se positionner au-dessus du caisson 2.

Les trois parties constitutives 2, 3, 4 de l'unité 1 délimitent ainsi un volume libre 5 de travail auquel on peut accéder par la partie avant et les côtés latéraux de l'unité 1.

Le caisson 2 est monté sur des roues 6 de préférence freinées, de façon à assurer la mobilité de l'ensemble 1 ; éventuellement il peut comporter une paire de pieds 7 comme représenté figures 1 et 2.

Le flux d'air stérile est généré dans le caisson 2 et les moyens de production de ce flux consistent en un moteur à rotor en disque 21. Comme ont peut le voir figure 2, ce moteur électrique 21 est logé dans la partie arrière du caisson 2. Il se compose de deux stators montés sur l'axe, qui entrainent le rotor situé entre eux et sur lequel est fixée la roue. L'utilisation d'un tel système, monté sur coussinets, permet l'obtention d'un moteur très peu bruyant et ne présentant aucune vibration. L'air produit par le ventilateur 21 est ensuite canalisé par une conduite 22 jusqu'à l'entrée 32 de la colonne porteuse 3, creuse et de section rectangulaire.

Le flux d'air ainsi généré est véhiculé, par l'intermédiaire de la conduite 22 et de la colonne 3, pour arriver au niveau de la hotte de distribution 4.

Cette hotte 4 renferme un déflecteur· 41 assurant la répartition uniforme du flux sur le filtre absolu 42, par lequel transite l'intégralité du flux d'air produit au niveau du caisson 2.

Le déflecteur 41 consiste en une simple plaque métallique, inclinée de l'arrière vers l'avant, occupant l'intégralité de la largeur de la hotte 4 et s'étendant environ sur les deux tiers de sa longueur, en partant de l'arrière ; elle permet ainsi de répartir de façon uniforme, la pression du flux d'air sur le filtre 42.

Ce filtre absolu 42 est maintenu en place dans la hotte 4 par l'intermédiaire de moyens de fixation 44, il est destiné à purifier le flux d'air pour obtenir le degré d'aseptie nécessaire au travail que l'on désire effectuer.

A titre d'exemple, en milieu chirurgical, les installations tendent à se situer en "classe 100", c'est-à-dire produisent un flux d'air comportant au maximum quatre particules de 0,5 micron et aucune supérieure ou égale à 5 microns, par litre d'air.

Pour d'autres travaux, la "classe 10 000" sera suffisante, c'est-à-dire que chaque litre d'air produit comporte quatre cents particules maximum de 0,5 micron et au maximum 2,3 particules supérieures ou égales à 5 microns.

Ce filtre absolu 42 a une structure déterminée à "petits plis" ou "plis profonds", de façon à obtenir, associé à la pression en amont du filtre, un écoulement laminaire de l'air à partir de la hotte 4.

Ces deux paramètres : structure du filtre et pression du flux, déterminent la vitesse d'écoulement du flux d'air qui sera de vingt sept mètres par minute ± six mètres par minute.

La partie inférieure de la hotte 4 comprend une grille de distribution 45 occupant la quasi totalité de la surface de la hotte 4.

Cette grille 45 peut par exemple être réalisée en inox ou aluminium, perforée de trous de deux mm de diamètre.

Le flux d'air stérile, sortant de la hotte distributrice 4, est un flux d'air délivré en filets parallèles et rectilignes, dirigés verticalement vers le bas, c'est-à-dire vers la surface supérieure 23 du caisson 2, ou dans certaines réalisations, vers un plan de travail 24.

La surface de distribution du flux laminaire est supérieure à la surface de la partie 23, ou à la surface du plan de travail 24 du caisson 2. Ainsi, lorsque l'unité fonctionne, le flux laminaire stérile occupe l'intégralité du volume surmontant ces parties inférieures 23 ou 24, et déborde au niveau de la partie avant et des côtés latéraux du caisson 2 pour former une barrière de protection contre les particules.

Ce flux "débordant", ne rencontrant pas les surfaces 23 ou 24, arrive au niveau de la partie inférieure 25 du caisson 2, lequel caisson 2 comporte, à ce niveau, des moyens de reprise du flux d'air par aspiration. Cette reprise d'air est réalisée sous le caisson 2 qui comporte à cet effet une plaque 26, réalisée en métal ou matière plastique par exemple, et qui sert de déflecteur. Ce déflecteur 26 est surmonté par un orifice 14 situé dans le fond du caisson 2, au niveau de sa partie avant ; cet orifice 14 sert à la reprise de l'air et est associé à un préfiltre 27 occupant toute sa surface et assurant une première rétention des bactéries et particules. Cette reprise d'air permet l'obtention d'un flux laminaire intégral entre la hotte 4 et le caisson 2.

Pour accroître la hauteur entre le plan de travail 24 et la hotte 4, on peut prévoir de positionner le filtre absolu 42 dans la colonne porteuse 3 ou encore dans le caisson 2 en aval du ventilateur 21. Cette possibilité de varier l'installation du filtre absolu 42, permet d'améliorer l'espace disponible au-dessus du plan de travail 24 sans rien modifier au gabarit de l'appareil. Cet appareil étant un appareil mobile, facilement déplaçable, son gabarit doit lui permettre de passer par les portes habituelles de communication.

On peut également prévoir de disposer, sur les côtés de la hotte 4, comme représenté, figure 3, des panneaux latéraux 46 qui assurent une canalisation du flux d'air stérile entre la hotte et le plan de travail 24. Ces panneaux 46 sont accrochés par tout moyen approprié sur les côtés 47 de la hotte 4. Ils s'étendent de la hotte jusqu'au niveau du plan de travail 24 et sont par exemple réalisés en matériau plastique translucide. Ils sont fixés de façon à pouvoir être enlevés rapidement et facilement pour ne pas entraver l'accès au plan de travail 24. L'avantage de ces panneaux 46 réside dans le fait qu'ils suppriment tout risque de déviation accidentelle du flux lors d'une utilisation de l'appareil pour la production d'un espace stérile dans le cas d'une utilisation comme coureuse par exemple.

L'air généré par l'unité de production 1 peut être chauffé au moyen d'un système de chauffage disposé dans le caisson 2. Dans ce cas, la hotte 4 comprend des moyens de régulation du chauffage du flux d'air. Ces moyens peuvent consister en une sonde associée à un système de commande ayant une action directe sur le chauffage.

Il est également possible d'associer à ce chauffage des moyens permettant une auto-régulation cutanée.

L'unité 1 de production du flux laminaire est également équipée de sécurités "trop chaud" et d'un système de surveillance de l'encrassement des filtres.

La surface supérieure 23 du caisson 2 peut recevoir un plan de travail 24, constitué, soit d'une simple plaque d'aluminium ou inox, pour les usages industriels, laboratoires d'analyses ou cabinets vétérinaires, soit d'un berceau orientable et tournant, à usage pédiatrique.

Afin de procurer un confort maximum de travail, le caisson 2 est alors muni d'un système de réglage de la hauteur du plan de travail. Ce réglage en hauteur est réalisé par l'intermédiaire d'un vérin 28 alimenté par une centrale hydraulique 29 située à l'avant et en partie haute du caisson 2.

Deux lampes 8 sont disposées dans la hotte 4, de part et d'autre de la grille de distribution 45, pour procurer un éclairage d'ambiance approprié à l'utilisation de l'appareil.

La commande et le fonctionnement de l'unité 1 sont réalisés par l'intermédiaire d'un tableau de commande et de contrôle 9. Ce tableau 9 comprend l'ensemble des moyens permettant la mise en marche, le réglage ainsi que le contrôle des différents paramètres à surveiller.

Il comprend à cet effet, en particulier, un interrupteur de commande générale, une commande de la vitesse du flux avec son contrôle, un système de programmation de la température, un interrupteur d'éclairage d'ambiance, une commande de la hauteur du plan de travail, ainsi qu'un ensemble de contrôle des différents paramètres associés à des alarmes. Le colmatage du filtre 42 est contrôlé au moyen d'un pressostat qui surveille la pression en amont dudit filtre 42, lequel pressostat sert de témoin et d'avertisseur.

Toutes les parois de l'unité de production 1 sont recouvertes d'une isolation 10 assurant l'insonorisation du dispositif. La structure de cette isolation est représentée figure 4 ; elles est située directement au contact des plaques métalliques constituant le châssis de l'unité 1 et elle comprend une épaisseur de mousse 11 de deux mm d'épaisseur environ suivie d'une feuille de plomb 12 en sandwich avec, de l'autre côté, une couche de 28 mm d'épaisseur environ de mousse à picot 13.

L'unité de production de flux laminaire stérile à circulation verticale, selon l'invention et telle que représentée sur les figures 1 et 2, permet diverses opérations, interventions, ou fabrication, dans des conditions d'asepsie correcte.

Ce système occupe un faible volume et ne nécessite aucun équipement spécial au niveau de la pièce. Il est également tout à fait possible de transférer ce matériel dans un lieu ou secteur déterminé, à volonté, permettant ainsi une grande souplesse d'utilisation.

Les dimensions de l'appareil et en particulier de la hotte et de la table de travail sont à déterminer suivant l'utilisation désirée.

Les signes de référence, insérés après les caractéristiques techniques mentionnées dans les revendications, ont pour seul but de faciliter la compréhension de ces dernières, et n'en limitent aucunement la portée.

## Revendications

1.- Unité mobile de production de flux laminaire stérile à circulation verticale, constituée :
- d'un caisson (2) comportant les moyens de production et de propulsion (21) du flux d'air,
- d'une colonne porteuse (3) s'étendant vers le haut à partir du caisson (2) et assurant le transport du flux,
- d'une hotte (4) partant de la partie supérieure (31) de la colonne (3) pour venir se positionner au-dessus dudit caisson (2), ladite hotte (4) étant munie d'un filtre (42) et d'une grille (45) pour la distribution du flux en direction du caisson (2), caractérisée en ce que la hotte (4) comprend des moyens permettant la répartition uniforme du flux produit sur le filtre (42) et en ce que la partie inférieure (25) de l'unité comporte des moyens de reprise dudit flux d'air par aspiration, lesquels moyens consistent en un orifice (14) situé dans le fond du caisson (2), de façon à réaliser un flux intégral vertical entre la hotte (4) et ledit caisson (2).

2.- Unité de production de flux laminaire selon la revendication 1, caractérisée en ce qu'elle comporte un pré-filtre (27), associé à l'orifice de reprise (14) sous lequel est disposée une plaque (26) servant de déflecteur.

3.- Unité de production de flux laminaire selon l'une quelconque des revendications 1 ou 2, caractérisée en ce que les moyens permettant la répartition uniforme du flux sur le filtre (42) consistent en une simple plaque (41), inclinée de l'arrière vers l'avant, occupant l'intégralité de la largeur de la hotte (4) et s'étendant environ sur les deux-tiers de la longueur de cette dernière, en partant de l'arrière ; ce déflecteur (41) assure la correction et la répartition du flux sur toute la surface dudit filtre (42).

4.- Unité de production de flux laminaire selon l'une quelconque des revendications 1 à 3, caractérisée en ce que la surface supérieure (23) du caisson (2) est apte à recevoir un plan de travail (24).

5.- Unité de production de flux laminaire selon l'une quelconque des revendications 1 à 4, caractérisée en ce que le caisson (2) comporte des moyens permettant le réglage en hauteur du plan de travail (24).

6.- Unité de production de flux laminaire selon l'une quelconque des revendications 1 à 5, caractérisée en ce que l'encombrement de la hotte (4) est supérieur à celui du plan de travail (24), ladite hotte (4) débordant au-dessus de celui-ci, au niveau de sa partie avant et sur ses côtés latéraux.

7.- Unité de production de flux laminaire selon l'une quelconque des revendications 1 à 6, caractérisée en ce que la hotte (4) comprend des moyens de régulation du chauffage du flux d'air ainsi que des moyens permettant une auto-régulation cutanée.

8.- Unité de production de flux laminaire selon l'une quelconque des revendications 1 à 7, caractérisée en ce que la hotte (4) est munie d'un tableau de commande (9) comportant l'ensemble des moyens assurant la mise en oeuvre et le contrôle du dispositif.

9.- Unité de production de flux laminaire selon l'une quelconque des revendications 1 à 8, caractérisée en ce qu'elle est munie d'un éclairage d'ambiance constitué de deux lampes latérales (8) disposées sous la hotte.

Planche unique

_fig. 1_

_fig. 3_

_fig.4_

_fig.2_

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| E | FR-A-2 622 960  (BARDET)<br>* En entier *<br>--- | 1-9 | F 24 F    3/16 |
| D,X | WO-A-8 504 240  (FOSTER et al.)<br>* Page 9, lignes 2-22; figure 2 * | 1,4 | |
| A | ---| 2,5,6 | |
| D,A | EP-A-0 062 719  (KLENZAIDS)<br>* Page 12, lignes 6-14; figure 10 *<br>--- | 1,4 | |
| A | US-A-3 688 477  (COWARD)<br>* Colonne 2, lignes 53-62; figures 2,6 *<br>--- | 1-3 | |
| A | PATENT ABSTRACTS OF JAPAN, vol. 10, no. 311 (M-528)[2367], 23 octobre 1986, page 89 M 528; & JP-A-61 122 433 (TAKASAGO THERMAL ENG. CO. LTD) 10-06-1986<br>--- | 7 | |
| A | FR-A-1 538 621  (SOCIETE IND. DE FILTATION)<br>* Figure 2 *<br>----- | 9 | **DOMAINES TECHNIQUES RECHERCHES (Int. Cl.5)**<br><br>F 24 F |

Le présent rapport a été établi pour toutes les revendications

| Lieu de la recherche | Date d'achèvement de la recherche | Examinateur |
|---|---|---|
| LA HAYE | 10-01-1989 | PESCHEL G. |

EPO FORM 1503 03.82 (P0402)

CATEGORIE DES DOCUMENTS CITES

X : particulièrement pertinent à lui seul
Y : particulièrement pertinent en combinaison avec un
     autre document de la même catégorie
A : arrière-plan technologique
O : divulgation non-écrite
P : document intercalaire

T : théorie ou principe à la base de l'invention
E : document de brevet antérieur, mais publié à la
     date de dépôt ou après cette date
D : cité dans la demande
L : cité pour d'autres raisons
 
& : membre de la même famille, document correspondant